# EUROPEAN PATENT APPLICATION

(11) **EP 4 578 751 A1**
(43) Date of publication of application: **02.07.2025**
(21) Application number: 24211866.9
(22) Date of filing: 08.11.2024
(51) Int. Cl.: B60W 30/09, B60W 30/095, B60W 30/18, B60W 40/04, G06V 20/58

(54) **METHOD FOR ADAPTING DRIVING OF A FIRST VEHICLE BASED ON A SAFETY RISK LEVEL ASSOCIATED WITH A CARGO OF A SECOND VEHICLE**

(71) Applicant: Volvo Car Corporation, 405 31 Göteborg (SE)
(72) Inventor: LENNARTSSON, Anders, 40531 Göteborg (SE); PEREZ BARRERA, Oswaldo, 40531 Göteborg (SE)
(74) Representative: Maiwald GmbH

(57) **Abstract**

The disclosure relates to a method (100) for adapting driving of a first vehicle (1) based on a safety risk level associated with a cargo (3) of a second vehicle (2), the method (100) comprising:
- obtaining cargo data indicative of the cargo (3) of the second vehicle (2);
- determining a safety risk level for the first vehicle (1) based on the cargo data; and
- providing a control instruction for adapting the driving of the first vehicle (1) based on the safety risk level, wherein the adapting of the driving of the first vehicle (1) depends on the determined safety risk level.

## Description

### TECHNICAL FIELD

The present disclosure relates to a method for adapting driving of a first vehicle based on a safety risk level associated with a cargo of a second vehicle, a computer program product, a data processing system, and a vehicle.

### BACKGROUND ART

There are many dangers for occupants of vehicles driving in the close vicinity of cargo carrying vehicles when the cargo is not properly secured. Events like objects of the cargo coming lose at high speeds can be life-threatening to the occupants of these vehicles. Hence, there is a need to prevent accidents or at least reduce the risk of dangers associated with vehicles carrying cargo that is not properly secured.

### SUMMARY

The problem is at least partially solved or alleviated by the subject matter of the independent claims of the present disclosure, wherein further examples are incorporated in the dependent claims.

According to a first aspect, there is provided a method for adapting driving of a first vehicle based on a safety risk level associated with a cargo of a second vehicle, the method comprising:
- obtaining cargo data indicative of the cargo of the second vehicle;
- determining a safety risk level for the first vehicle based on the cargo data; and
- providing a control instruction for adapting the driving of the first vehicle based on the safety risk level, wherein the adapting of the driving of the first vehicle depends on the determined safety risk level.

Hence, the method provides the advantage for a first vehicle to adapt its driving based on a safety risk level associated with the cargo of a second vehicle in a vicinity or, in other words, environment or surrounding of the first vehicle. For this purpose, the method provides for obtaining cargo data indicative of the cargo of the second vehicle. The method may in particular be receiving the cargo data. The cargo data may be obtained from any detection system or type of the first vehicle, e.g., any sensor system, a camera system, a laser system, a radar system, a LiDAR system, a combination of any two or more of the aforementioned, and similar. Alternatively, or additionally, the cargo data may be obtained by means of wireless transmission or communication from an entity outside or different from the first vehicle, e.g., from another vehicle or any entity connected via Vehicle2X communication with the first vehicle, for example. For example, the method may be receiving the cargo data from a cloud, another vehicle, and similar. The cargo data may for example be indicative of any one or more of a type of the cargo, a hazard indication of the cargo, a size of the cargo, dimensions of the cargo, a weight of the cargo, a location of the cargo on the second vehicle, a location and/or distance of the cargo or second vehicle relative to the first vehicle, a movement of the cargo during driving of the second vehicle, an attachment or securement of the cargo to the second vehicle, and similar. From any one of these exemplary information, the safety risk level may be determined. The safety risk level indicates a level of risk for the safety of the first vehicle depending on the cargo of the second vehicle. The safety risk level may be based on the cargo data only or, additionally, on other data, such as driving data, for example. Driving data may be indicative of a speed of the second vehicle, the first vehicle, a distance between the first vehicle and the second vehicle, and/or similar or other driving-related parameters. The determining of the safety risk level may generally return different safety risk levels, which may be two or more or grouped into two or more. For example, one safety risk level may be associated with no or low risk. Consequently, when the safety risk level is determined as no risk or low risk, no control instruction may be provided or a control instruction of low extent for adapting the driving of the first vehicle may be provided. For example, another safety risk level may be associated with a medium or high risk. Consequently, when the safety risk level is a medium or high risk, a control instruction of medium or high extent for adapting the driving of the first vehicle may be provided. Accordingly, the method may in effect adapt the driving depending on the determined safety risk level. Specifically, the extent or, in other words, magnitude or dimension of the adaptation of the driving of the first vehicle according to the provided control instruction may be correlating to the determined safety risk level. The control instruction depends on the determined safety risk level. In particular, the control instruction or adapting of the driving of the first vehicle may correlate, in its extent or level or magnitude, to the determined safety risk level. Hence, the greater the safety risk level associated with the cargo on the first vehicle, the greater the adapting of the driving of the first vehicle may be to avoid an accident associated with the cargo being lost by the second vehicle.

The first vehicle may be an ego vehicle, which may carry out the method. For example, the first vehicle may comprise at least partially autonomous capabilities or functions by having one or more systems for autonomous driving. In particular, the first vehicle may be at least partially autonomously controlled. At least partially means that the ego vehicle may be controlled partially or fully autonomously, e.g., by a computer thereof instead of a human driver. Partially means, that one or more systems for autonomous driving may be used, e.g., cruise control, distance keeping assistant, lane keeping assistant, etc. but the human driver may still be required to perform certain actions for driving the ego vehicle, e.g., steering or braking. The second vehicle may be another vehicle. Any of the first vehicle, the second vehicle and any other herein mentioned vehicle may be cars, in particular passenger cars, trucks, and similar road vehicles.

For example, the provision of the control instruction may be to and/or for a system for autonomous driving, the system being of the first vehicle. The control instruction may correspondingly be carried out by such system for autonomously adapting the driving of the first vehicle based on the determined safety risk level. As a non-limiting example, the control instruction may be to reduce the speed of the first vehicle or switch lanes and the system of the first vehicle carrying out this control instruction may be a cruise control system and/or a lane change system. Alternatively, or additionally, however, the control instruction may be configured as a control instruction to the driver. For example, such control instruction may be displayed to the driver in a cockpit of the first vehicle and/or acoustically announced via one or more speakers of the first vehicle. For example, the control instruction may be displayed to the driver in a digital cockpit as text and/or image suggesting reducing the speed and/or switch lanes. Hence, in addition to or alternative to at least partially autonomously adapting of the driving of the first vehicle, a human driver of the first vehicle may react based on the determined safety risk level and, more specifically, based on a determined driving instruction to be performed by the driver. Consequently, however, the ultimate decision on whether to adapt the driving associated with the safety risk level may remain in the responsibility of the driver.

The method of the first aspect may in particular be a computer implemented method. This means that at least one, multiple or all the steps of the method may be carried out by a data processing system, which may comprise one or more computers or computing units. Different steps may be carried out by the same or by different computers. A computer is herein understood as a data processing device apparatus, which can carry out the steps as defined by the method. The one or more computers or data processing apparatuses may be configured as or provided inside of one more control units of the vehicle.

The cargo data and/or additional driving data, which may be obtained by the method, may be further indicative of driving parameters and/or situational parameters. Such parameters may for example be indicative of a travel direction of the second vehicle and/or a driving operation, in particular a turning operation, of the second vehicle. Such travel direction and/or driving operation may be considered for determining the safety risk level associated with the cargo of the second vehicle. For example, for certain travel or driving operations, such as turns or lane switching or breaking, the safety risk level of losing cargo may be higher than when driving at a constant speed. Hence, when the method also considers driving parameters (e.g., speed, travel direction, etc.) or situational parameters (e.g., distance between the vehicles, location of the vehicles relative to one another, stop lights ahead of the vehicles, etc.) of the second vehicle and/or the first vehicle, the method may more accurately determine the safety risk level compared to when it would consider only how securely the cargo is fixed on the second vehicle, what type the cargo has, and similar.

In an example, the cargo data may be comprising one or more images of the cargo and/or the second vehicle. Further, the determination of the safety risk level may be based on computer vision. The one or more images may be captured by a camera system of the first vehicle, which may comprise one or more camera units. The one or more images may also be video. Computer vision is a technique by means of which the information contained in the one or more images of the second vehicle, e.g., using an artificial intelligence or machine learning algorithm, can be extracted into understandable information, e.g., numerical and/or symbolic information, and used for a specific purpose. For example, based on computer vision, the information about a type, a size, and an attachment of cargo to the second vehicle, which the first vehicle may be approaching. Also, by means of computer vision, it may be determined how the second vehicle is positioned relative to the first vehicle, in particular to its camera system or, in other words, which perspective of the second vehicle the one or more images are showing, e.g., a front, rear or side perspective of the second vehicle. Hence, it may be derived that the first vehicle is driving in front of the second vehicle, the one or more images thus showing the cargo of the second vehicle as may be detected by a rear camera of the first vehicle. Alternatively, the first vehicle may be driving behind the second vehicle, approaching the second vehicle or positioned to the side of the second vehicle, e.g., in an overtaking maneuver. In addition to, or alternatively to computer vision, the first vehicle may be using other sensor systems such as a radar system and/or a LiDAR system, to determine the position of the first vehicle relative to the second vehicle and thereby the cargo of the second vehicle shown in the one or more images. For example, the computer vision may be used to detect pixels in the image representing the cargo and any information associated therewith, e.g., how it is secured to the second vehicle, its shape, its dimensions, and similar.

In an example, the determination of the safety risk level may comprise a comparison between the one or more images and one or more reference images. The comparison between the images of the cargo data for the current driving situation with one or more reference images can enhance the accuracy of the determination of the safety risk level. Specifically, the one or more reference images may be from a database and the images may be from different cargos and/or for different second vehicles. In other words, the reference images may reflect different real-world scenarios. By comparing with these, it may be possible to better understand the situation of a cargo transport and the safety risk associated therewith in a given situation. For example, the first vehicle may be travelling behind a truck as second vehicle. With the use of exterior cameras and computer vision on the first vehicle, the first vehicle could detect a gas canister as cargo and compare that picture with a database. Following this, the first vehicle may conclude that the load might be a potential hazard to the first vehicle, which may consequently be reflected in the determination of a higher safety risk level than when the cargo is non-flammable. In another or additional example, the first vehicle may use its exterior cameras to detect what kind of second vehicle is carrying the cargo. If the first vehicle would be traveling behind a truck as second vehicle, the first vehicle could use computer vision and either a cloud or a locally stored database containing the reference images to determine that the second vehicle is a dump truck. This detection could also or alternatively be based on the license plate of the second vehicle. Based on that detection, the first vehicle may know what kind of cargo this second vehicle usually carries. With that information it may be easier and quicker to detect what type of cargo the second vehicle carries at the moment. The first vehicle may also use its exterior cameras to detect what the second vehicle is carrying, such as gravel, for example. This cargo or, in other words, load might pose a risk of coming loose, flying off the truck, and hitting the first vehicle. The safety risk level will accordingly be determined considering this.

In an example, an extent of the adapting of the driving of the first vehicle may correlate with the determined safety risk level. The extent of the adapting of the driving may be or may be relating to a selection of one or more driving actions and/or selection of a severity of the driving action. Specifically, the one or more driving actions may be selectable or selected from a number of different driving actions, which may be available. Exemplary driving actions are acceleration, deceleration, stopping, lane switch, and similar. The severity of the driving action may for example relate to how much or fast the first vehicle is accelerated, decelerated, stopped, how many lane switches are performed, and similar. Accordingly, more severe driving actions such as stopping the first vehicle, will only be executed to adapt the driving of the first vehicle when the safety risk level is comparatively high. On the other hand, less severe driving actions such as smooth decelerations for keeping a larger distance to the second vehicle, may be taken at comparatively low safety risk levels.

In an example, the safety risk level may be determined for an overtaking maneuver of the first vehicle. This means that the safety risk level considers how risky an overtaking maneuver may be based on the cargo data. For example, when it is determined that the cargo may fall off within a certain time frame based on the cargo data, the control instruction may correspondingly be configured for overtaking the second vehicle or not depending on the time frame and risk associated with the cargo.

In an example, the safety risk level may be determined based on one or more of: a vehicle type of the second vehicle, a type of cargo, a height of the cargo, a load distribution of the cargo on the second vehicle, a level of danger associated with the cargo, a method or means of securing the cargo to the second vehicle, or an extension of the cargo outside of the second vehicle. In particular, the safety risk level may be determined based on one, two, three or more factors from the aforementioned list. The vehicle type may for example by any of a car, pick-up, truck, and similar. Depending on the type of vehicle, a different safety risk may be associated therewith. Specifically, the method may consider one or more specification or characteristic of the second vehicle. For example, if the cargo is loose and the vehicle is stopped at a red light, the first vehicle should be adapted in the driving to behave differently based on whether the cargo vehicle is a tractor or a pick-up track because the acceleration will have an influence in the risk assessment, i.e., higher chances of the cargo falling off after sudden acceleration. Similarly, different types of cargo, such as flammable and non-flammable, or lightweight or heavyweight, may also be associated with different safety risks. Also, the overall size in terms of height, the load distribution of the cargo, extension of the cargo outside of the second vehicle, e.g., outside of a trunk of a car, may be associated with different safety risks. For example, the load distribution may be uneven. Hence, the second vehicle may be difficult to steer by the driver, which may pose a risk to the first vehicle. To avoid false recognition of uneven load distribution, the first vehicle may be configured to detect the tires of the second vehicle and analyze them for tire pressure. Also, it may be important how the cargo is secured to the second vehicle because this may also influence the safety risk level. By considering one or more of these factors, the safety risk level may be determined with a high precision such that the control instruction is one the one hand sufficient to reduce the safety risk and on the other hand is not restricting the comfort of the first vehicle's passengers by taking overly severe or restrictive measures when adapting the driving of the first vehicle. With regard to the method or means of securing the cargo to the second vehicle, the method may determine, based on the cargo data, if the cargo is properly secured to the second vehicle. Specifically, the first vehicle may use exterior cameras and/or sensors to detect that cargo, e.g., the exemplary mentioned gas cannisters, are secured with a metal cage and ratchet straps or other means. The more securement means are being used, the higher the safety risk level may be determined. Also, or alternatively, the method may analyze one or more methods or means of securement to determine whether the cargo is secured safely or not. For example, when the first vehicle has detected a ratchet strap, load net, chain or similar, the first vehicle may start to track the movement of the object securing the load to determine if it is tight or loose. The tracking may be done by taking consecutive images or video of the cargo. For example, first a strap may be detected as securing means. If the area of the detected strap correlates to the width of the strap, no movement is detected, which indicates that the strap is tight, strapping the load down and hence, the load is safely secured. However, if the area of the detected strap is bigger, movement is detected which indicates that the strap is loose, and thus that the load might be loose, indicating a higher safety risk level. The first vehicle may also or alternatively track the cargo itself. With the help of tracking the distance between cargo and the edge of second vehicle, the first vehicle may determine if the cargo is moving on the vehicle. The first vehicle may also or alternatively start tracking the distance between two points, and if the distance varies over a certain time, the first vehicle may know that the cargo is moving. If the distance is the same over a certain timespan, the first vehicle may know that the cargo is secured. The two points may be either located on common horizonal or vertical line or plane when tracking the rear of the second vehicle. Similar tracking of movement or distance may also be performed along the second vehicle when tracking the side of the second vehicle. The first vehicle may track several objects loaded on the second vehicle. The first vehicle may take a picture of the second vehicle and compare it with a database of secured and unsecured loads, to determine if the load is secured to the second vehicle in safe way, or not. The first vehicle may also detect if a vehicle has a load that sticks out from the second vehicle. The first vehicle may use vehicle recognition and/or license plate recognition to recognize the length of the second vehicle. Based on the detection of the protruding object or cargo, the first vehicle may detect how much of the cargo is sticking out from the second vehicle. Also, the cargo data may be indicative of the second vehicle not moving. Still, the method may be executed, specifically when the load is extending outside of, or, in other words, sticking out of the second vehicle, since this may still pose a threat to the first vehicle and other road users. Moreover, when detecting that the cargo load is sticking out, the first vehicle may detect the distance to the ground and include this in the determination of the risk level. Specifically, a taller cargo load above the height of the first vehicle may be less risky than a shorter cargo load for the first vehicle behind it due to an increased distance for a front collision with the rear of the second vehicle. Also, the method may consider the sizes of several objects of the cargo and their location and movement with respect to another. For example, if an object is moving but limited in terms of movement by another object of that cargo such that it is less likely to fall off, than this may be considered for the determination of the safety risk level.

In an example, the determination of the safety risk level may consider whether one or more vehicle lights of the second vehicle are blocked by the cargo. In other words, the method may determine if the vehicle lights, particularly rear lights, of the second vehicle are blocked by cargo, and therefore not be visible for example when activating braking, indicating or hazard light. The therewith associated safety risk of obstructed vehicle lights may accordingly be taken into account for the consequent adapting of the driving of the first vehicle based on the control instruction based on the safety risk level. The method may generally use any of exterior cameras of the first vehicle, image recognition performed on the first vehicle, internet and/or database information to determine if the vehicle lights are blocked, in particular to determine a degree of blocking of one or more vehicle lights of the second vehicle. In particular, the determined safety risk level may be depending on or relating to a degree of blocking of one or more vehicle lights of the second vehicle.

In an example, the determination of the safety risk level may consider one or more road characteristics of a road being travelled by the second vehicle, the one or more road characteristics being at least from one or more of: a road infrastructure, a road topography, a road condition, and a road curvature. Thereby, the safety risk level may be determined even with more accuracy depending on the road characteristics of the road. Consequently, the control instruction may be better tailored towards the actual safety risk for the first vehicle depending on the road characteristics. For example, the first vehicle may be driving behind a truck carrying cars on a trailer. Consequently, the first vehicle may approach a bridge or overpass. The first vehicle may obtain the height of the truck as part of the cargo data or as further data. The first vehicle may also obtain the maximum allowed height to pass under the bridge or overpass. This could be obtained from a cloud server, sign detection, measuring the height with the exterior cameras/sensors of the first vehicle or similar. Based on these heights, specifically if the height of the truck is similar to or greater than the allowed height, the safety risk level may accordingly be determined to be very large and consequent adaptation of the driving of the first vehicle may be employed. In another example, if the road has an uphill or downhill section, this may influence the likelihood of cargo falling off from the second vehicle and consequently be considered in the determination of the safety risk level. In another example, the first vehicle may use the method and detect a truck with a high/tall load as second vehicle and cargo. The first vehicle may use geolocation techniques such as GPS or other means to detect that first vehicle is approaching a sharp turn, where the truck is at risk of rolling over due to the sharp turn and the tall load. In order to avoid being involved in a rollover accident, the first vehicle may avoid being in the curve at the same time as unsafe cargo by adapting its driving, e.g., by speeding up or slowing down. Also, the first vehicle may warn both oncoming traffic and traffic traveling in the same direction about the risk of a roll over. In yet another example, the first vehicle may detect road conditions that may increase the risk of the cargo coming loose, for example potholes. If a second vehicle in front of the first vehicle has cargo that is not properly secured and then drives into a pothole, the cargo may fly off the first vehicle and hit the second vehicle.

In an example, the determination of the safety risk level may consider one or more weather characteristics. The one or more weather characteristics may comprise at least a wind intensity. Also, a wind direction may be included as weather characteristic. Hence, the first vehicle may also include the weather conditions when calculating the risk. Specifically, the first vehicle may have detected a second vehicle carrying a high/tall load. The first vehicle may then have information that there will be strong winds in the area. The first vehicle may collect the information itself or it may come from external sources, such as weather stations in the area, from a weather forecast or from other vehicles sharing the information, for example. With this information, the first vehicle may determine that the high/tall load may fall over or make the second vehicle carrying it sway from side to side. In the case of strong winds, the first vehicle may use the weather information in combination with GPS or any other geolocating technique and maps to detect locations that may have a higher risk of the second vehicle with high loads/cargo turning over, e.g., bridges. Also, when determining the safety risk level, the method may consider the location of the first vehicle with respect to the second vehicle and the wind direction. For example, the first vehicle may be adapted in its driving such that the risk of having a load or cargo be loosened due to strong winds and fall onto the first vehicle is reduced. For example, if the wind direction is from left to right, the first vehicle may be driving left of the second vehicle such that the risk of having the cargo fall onto the first vehicle due to strong wind is reduced. Also, the wind conditions may be taken into account during driving in a tunnel such that the provision of the control instruction considers the wind conditions outside of the tunnel. For example, it may be advantageous to overtake a second vehicle with cargo inside a tunnel due to increased risk of the cargo of the second vehicle falling off outside of the tunnel due to the wind conditions.

In an example, the determination of the safety risk level may consider information indicative of one or more location characteristics of a location of the first vehicle, the one or more location characteristics being indicative of an amount of cargo and/or a type of cargo being transferred. For example, the first vehicle may be driving on a road close to a gravel pit, a mine or similar. The first vehicle may thus know that the risk to encounter a truck hauling gravel is larger than normally. The first vehicle may accordingly be more cautious around the type of trucks that could potentially be hauling that kind of cargo. For example, the first vehicle may based thereon adapt its driving, e.g., drive slower. Alternatively, the first vehicle may be approaching a location where a hardware store is located. The first vehicle may access the Internet or any other source of information and receive the information about how busy the hardware store is. Based on this information, the first vehicle may know that there is an increased risk of encountering vehicles carrying unsecured cargo.

In an example, the determination of the safety risk level may consider whether one or more doors of the second vehicle are secured and/or whether the second vehicle has one or more side walls at least partially enclosing the cargo. For example, the method may be considering whether the back doors of the second vehicle are open or closed. Potentially, the method may include determining a degree of opening. The safety risk level may increase with a higher degree of opening of one or more back doors and hence, the safety risk may be determined with more precision when considering or determining whether or in how far the doors of the second vehicle are secured. Similarly to the doors, the method may also consider whether one or more side walls are enclosing or restricting the cargo from moving outside of the second vehicle or not. For example, the method may be taking into consideration the model of the cargo carrying second vehicle by performing license plate detection or performing a vehicle model recognition algorithms. This is helpful because a load moving left/right in e.g. a pick-up will be safer than the same load in a vehicle with no side walls. Also, license plate detection may be used to determine the owner of the vehicle and therefrom determine the type of cargo, e.g., whether the second vehicle is from an oil or gas company or a food company, which transport cargo of different safety categories.

In an example, the method may be further comprising providing a signal for transmission to the second vehicle, a server and/or other road users, the signal being indicative of the determined safety risk level and/or indicative of the cargo being lost from the second vehicle. The signal may consequently be transmitted by any wireless communication means, such as through Vehicle2X or Vehicle2Vehicle communication. Thereby, the cargo carrying vehicle or other road users or vehicles may be informed about the safety risk level and/or an incident due to the cargo being lost, thereby increasing the traffic safety. Specifically, if the cargo falls, and the first vehicle detects it, it can be reported with one or more of the following information contained in the signal: type of cargo (or object), size of cargo, location, lane, and time of detection. The accuracy of this information may depend on time, for example 30 seconds ago can mean high accuracy and 2 min ago can mean low accuracy. This way, even if other road users are not in the first vehicle's vicinity when the cargo falls off, they may know an object is on the road. Also, it may be provided that the method includes requesting from other vehicles or road users or road infrastructure, e.g., a server, to confirm the determined safety risk level and/or receiving a safety risk level from other vehicles or road users or road infrastructure, e.g., a server. This communication may be conducted via any other wireless transmission technique as mentioned herein. The first vehicle may for example communicate with pedestrians by sending the request to a handheld or wearable device. Additionally, or alternatively, the first vehicle may request images or confirmation from infrastructural cameras and/or sensors, e.g., traffic cameras for determining the safety risk level and/or confirming the determined safety risk level. Accordingly, the safety risk level may be determined with more accuracy and more reliable. Also, the first vehicle may keep track of a second vehicle carrying the cargo. If the second vehicle is involved in an accident, the first vehicle may communicate the information to an emergency service. For example, flammable cargo could be a crucial information that may be communicated for the fire service because of risk of explosion. Moreover, the first vehicle may be warning the second vehicle itself by transmitting the signal thereto.

In an example, the method may be further comprising providing a second control instruction for at least partially adapting a vehicle lighting of the first vehicle and/or for emitting a first vehicle sound based on the determined safety risk level. By using the vehicle lighting and/or vehicle sound as a signaling means, other road users, e.g., pedestrians, may be informed about the determined safety risk level even if they do not have the means to receive a signal. Specifically, when there is a high safety risk level, the first vehicle may for example use high beams and/or the vehicle horn to alarm other road users such as pedestrians or other vehicles about the high-risk situation. Moreover, the first vehicle may be warning the second vehicle itself by using the vehicle lighting and/or vehicle horn to alarm the second vehicle of the risk associated with the cargo suggesting the second vehicle to stop.

According to a second aspect, there is provided a computer program product comprising instructions which, when executed by a computer, cause the computer to carry out the method of the first aspect of this disclosure. The computer program product may be a computer program as such, or a computer readable medium having stored the computer program thereon.

According to a third aspect, there is provided a data processing system comprising instructions which, when executed by a data processing system, cause the data processing system to carry out the method of the first aspect.

According to a fourth aspect, there is provided a vehicle comprising at least one of the computer program product of the second aspect of this disclosure or the data processing system of the third aspect of this disclosure.

It is noted that the above examples may be combined with each other irrespective of the aspect involved. Accordingly, the method may be combined with structural features and, likewise, the computer program product, the data processing device, and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method for adapting driving of a first vehicle based on a safety risk level associated with a cargo of a second vehicle;
- Figure 2: shows a schematic illustration of the first vehicle; and
- Figure 3: shows a schematic illustration of a driving scenario.

### DETAILED DESCRIPTION

The Figures are merely schematic representations and serve only to illustrate examples of the disclosure. Identical or equivalent elements are in principle provided with the same reference signs.

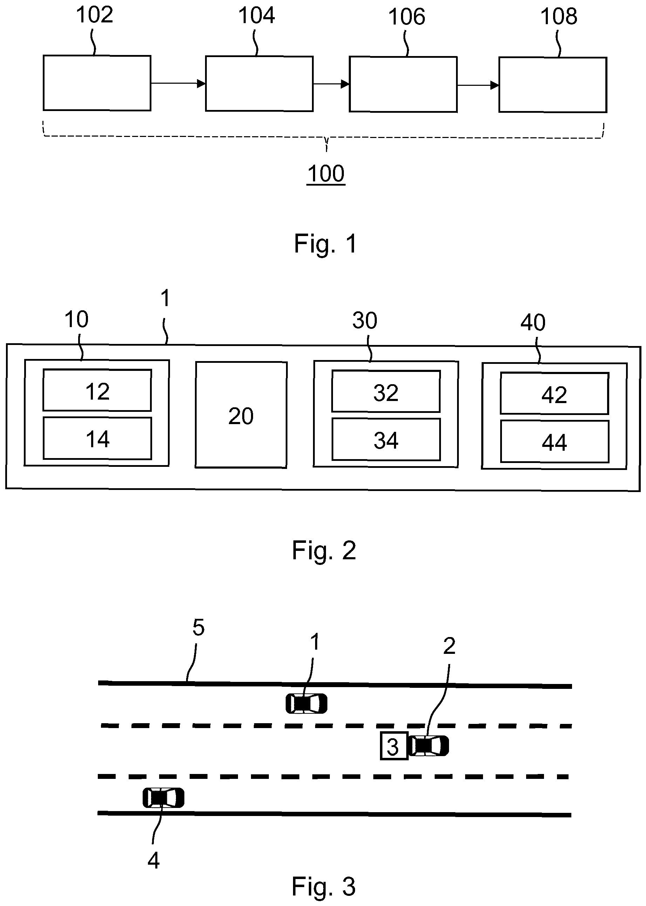

Figure 1 shows a schematic illustration of a method 100 for adapting driving of a first vehicle 1 based on a safety risk level associated with cargo 3 of a second vehicle 2 as exemplary shown in the driving scenario on the road 5 illustrated schematically in Fig. 3. The first vehicle 1 may be also referred to herein as an ego vehicle. The ego vehicle may carry out the method 100 as further described herein.

Figure 2 shows a schematic illustration of the components or systems of the first vehicle 1. The first vehicle 1 may comprise a detection system 10 for detecting its environment. For example, the detection system 10 of this example comprises a camera system 12 with one or more camera units for taking images and/or videos of the environment of the first vehicle 1, e.g., of the rear of the second vehicle 2 driving in front of the first vehicle 1 in the driving scenario of Fig. 3. Optionally, the detection system 10 may comprise any further system such as the herein exemplary shown radar and/or LiDAR system 14. Further, the first vehicle 1, such as any other vehicle, i.e., the second vehicle 2 and any further vehicles 4 as shown in Fig. 3, may comprise a communication system 20 for wireless communication through Vehicle2Vehicle or Vehicle2X communication. In

In this exemplary case, the first vehicle 1 may be configured as an at least partially autonomous or fully autonomous vehicle 1. As such, the first vehicle 1 may comprise a system for autonomous driving 30, which may comprise one or several functions or assistants for autonomous driving. Merely as an example, a cruise control 32 and a lane change assistant 34 are shown as autonomous functions provided by the system 30. Further, the first vehicle 1 may comprise a data processing system 40 comprising a computer program product 42 and a data processing device 44. The system for autonomous driving 30 may be at least partially implemented in software and executed separate from the data processing system 40 or by the data processing system 40, for example, or any other data processing system of the vehicle 1. When the instructions stored on the computer program product 42 are executed by the data processing device 44, the first vehicle 1 may carry out the method 100 as explained further herein.

In a step 102 of method 100, the data processing device 44 may obtain cargo data indicative of the cargo of the second vehicle 2 as shown in Fig. 3. Specifically, the data may be determined by the detection system 10 and provided to the data processing device 44, thereby being obtained there. For example, the camera system 12 may capture one or more images of the second vehicle 2 and its cargo 3.

In a step 104 of method 100, the data processing device 44 may determine a safety risk level for the first vehicle 1 based on the cargo data, in particular based on computer vision, which may mean that the one or more images are processed by computer vision. In particular, these images may be compared to known images or processed by an artificial intelligence or machine learning algorithm to determine one or more of: a vehicle type of the second vehicle 2, a type of cargo 3, a height of the cargo 3, a load distribution of the cargo 3 on the second vehicle 2, a level of danger associated with the cargo 3, a method or means of securing the cargo 3 to the second vehicle 2, or an extension of the cargo 3 outside of the second vehicle 2.

Then, in step 106 of method 100, the data processing device 44 may provide a control instruction for adapting the driving of the first vehicle 1 based on the determined safety risk level. Specifically, an extent of the adapting of the driving of the first vehicle 1 may be based on the determined safety risk level. Hence, this control instruction may be provided, in particular specifically determined for the present case of the driving situation taking into account the cargo 3 of the second vehicle 2 and the positioning of the first vehicle 1 relative to the second vehicle 2 or generally the driving situation and any other vehicles 4 in the environment, e.g., as may be determined by the radar and/or LiDAR system 14.

The control instruction may be provided to the system for autonomous driving 30 or for manual execution by a human driver of the first vehicle 1, for example. Consequently, the control instruction may be carried out in step 108 of the method 100, e.g., by the system for autonomous driving 30. For example, the adapting of the driving of the first vehicle 1 in the driving scenario of Fig. 3 may be that the first vehicle 1 decelerates to increase its distance to the second vehicle 2, thereby ensuring that the second vehicle's 2 cargo does not hit the first vehicle 1 when it falls off in case of a high safety risk level. However, generally, different driving actions may be considered, and the control instruction may select one of different driving actions to be carried out, which may correspond to the previously mentioned extent of the adapting of the driving of the first vehicle 1 and may further comprise an extent of the selected driving action itself, e.g., how strong the first vehicle 1 decelerates in the example of Fig. 3.

In Fig. 3, at least one other vehicle 4 is present in the driving situation on the road. The first vehicle 1 may also carry out the method 100 for the other vehicle 4 approaching the first vehicle 1 on the opposite lane.

Further, as shown in Fig. 2, the first vehicle 1 may have a communication system 20. The communication system 20 may be configured for wireless communication via a cellular connection, Wi-Fi connection, Bluetooth connection and/or similar. Any wireless communication or connection technology may be used. For example, the communication system 20 may accordingly comprise a transmitter, receiver and/or a transceiver, e.g., with an antenna. Similarly, any of the second vehicle 2 and the other vehicles 4 may comprise such communication system 20. By means of the communication system 20, the first vehicle 1 may exchange signals or data with the second vehicle 2, the other vehicles 4 and/or generally a server by means of respective connections between the respective entities.

The communication through any of the connections may be advantageous in several cases, one example of which is that the other vehicle 4 behind the second vehicle 2 may transmit cargo data and/or safety risk level data determined by itself to the first vehicle 1 for verification of the safety risk level determined by the first vehicle 1. Another example is that the first vehicle 1 may notify the other vehicle 4 approaching the first vehicle 1 about the safety risk level associated with the cargo 3 of the second vehicle 2 by transmitting a signal thereto such that the other vehicle 3 is aware of the potentially dangerous situation and may correspondingly react with its own driving actions. Yet another example is that the first vehicle 1 may send such signal to the second vehicle 2 itself, thereby informing it about the safety risk level associated with its cargo 3. Hence, the driver of the second vehicle 2 may be informed and make a stop to properly or better secure the cargo 3. Moreover, there is the possibility that in addition or alternatively to the communication system 20, the first vehicle 1 may make use of its vehicle lighting and/or horn for alarming or notifying the second vehicle 2 and/or the further vehicle 4 about a high safety risk level associated with the cargo 3 of the second vehicle 2.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: first vehicle
- 2: second vehicle
- 3: cargo
- 4: further vehicle
- 5: road
- 10: detection system
- 12: camera system
- 14: radar and/or LiDAR system
- 20: communication system
- 30: system for autonomous driving
- 32: cruise control
- 34: lane change assistant
- 40: data processing system
- 42: computer program product
- 44: data processing device
- 100: method
- 102 - 108: steps

## Claims

1. A method (100) for adapting driving of a first vehicle (1) based on a safety risk level associated with a cargo (3) of a second vehicle (2), the method (100) comprising:
- obtaining cargo data indicative of the cargo (3) of the second vehicle (2);
- determining a safety risk level for the first vehicle (1) based on the cargo data; and
- providing a control instruction for adapting the driving of the first vehicle (1) based on the safety risk level, wherein the adapting of the driving of the first vehicle (1) depends on the determined safety risk level.

2. The method (100) of claim 1, wherein the cargo data comprises one or more images of the second vehicle (2) and the cargo (3), and the determination of the safety risk level is based on computer vision.

3. The method (100) of claim 2, wherein the determination of the safety risk level comprises a comparison between the one or more images and one or more reference images.

4. The method (100) of any one of the previous claims, wherein an extent of the adapting of the driving of the first vehicle (1) correlates with the determined safety risk level, the extent of the adapting of the driving relating to a selection of one or more driving actions and/or selection of a severity of the driving action.

5. The method (100) of any one of the previous claims, wherein the safety risk level is determined for an overtaking maneuver of the first vehicle (1).

6. The method (100) of any one of the previous claims, wherein the safety risk level is determined based on one or more of: a vehicle type of the second vehicle (2), a type of cargo (3), a height of the cargo (3), a load distribution of the cargo (3) on the second vehicle (2), a level of danger associated with the cargo (3), a method of securing the cargo (3) to the second vehicle (2), or an extension of the cargo (3) outside of the second vehicle (2).

7. The method (100) of any one of the previous claims, wherein the determination of the safety risk level considers whether one or more vehicle lights of the second vehicle (2) are blocked by the cargo (3).

8. The method (100) of any one of the previous claims, wherein the determination of the safety risk level considers one or more road characteristics of a road (5) being travelled by the second vehicle (2), the one or more road characteristics being at least from one or more of: a road infrastructure, a road topography, a road condition, and a road curvature.

9. The method (100) of any one of the previous claims, wherein the determination of the safety risk level considers one or more weather characteristics, the one or more weather characteristics comprising at least a wind intensity.

10. The method (100) of any one of the previous claims, wherein the determination of the safety risk level considers information indicative of one or more location characteristics of a location of the first vehicle (1), the one or more location characteristics being indicative of an amount of cargo (3) and/or a type of cargo (3) being transferred.

11. The method (100) of any one of the previous claims, wherein the determination of the safety risk level considers whether one or more doors of the second vehicle (2) are secured and/or whether the second vehicle (2) has one or more side walls at least partially enclosing the cargo (3).

12. The method (100) of any one of the previous claims, the method (100) further comprising:
- providing a signal for transmission to the second vehicle (2), a server and/or other road users, the signal being indicative of the determined safety risk level and/or indicative of the cargo (3) being lost from the second vehicle (2); and/or
- providing a second control instruction for at least partially adapting a vehicle lighting of the first vehicle (1) and/or for emitting a first vehicle sound based on the determined safety risk level.

13. A computer program product (42) comprising instructions which, when executed by a data processing system (40), cause the data processing system (40) to carry out the method (100) of any one of the claims 1 to 12.

14. A data processing system (40) comprising means for carrying out the method (100) of any one of the claims 1 to 12.

15. A vehicle (1) comprising the data processing system (40) of claim 14.
